# EUROPEAN PATENT APPLICATION

(11) **EP 1 355 478 A1**
(43) Date of publication of application: **22.10.2003**
(21) Application number: 02008272.3
(22) Date of filing: 19.04.2002
(51) Int. Cl.: H04M 1/02, H04M 1/23

(54) **Upper casing part for electronic apparatus**

(71) Applicant: Chang, Chih-Ming, Keelung City (TW)
(72) Inventor: Chang, Chih-Ming, Keelung City (TW)
(74) Representative: Müller-Boré & Partner Patentanwälte

(57) **Abstract**

An upper casing part for an electronic device with an integrated keypad, comprising a single-piece casing part; wherein said single-piece casing part comprises a keypad arranged on at least part of its outer surface having at least one key, wherein said key is integrally formed with said casing part by providing an interstice extending between at least a part of the outer circumference of said key and said casing part and a connecting junction for connecting said key with said casing part so as to form said casing part integrally with said key, and wherein a contacting pin is formed integrally and arranged behind said key and extends inwardly away from said outer surface of said casing part.

## Description

The present invention relates to an upper casing part for electrical products with an integrated keypad, such as mobile phones, telephones, calculators, computer keyboards, remote controls, or the like.

### Description of Prior Art

Electrical products with a keypad, such as mobile phones or remote control, comprise a cover board, a keypad, a keystroke contacting piece, an IC board and a bottom casing part. When assembling these components of electrical products, several openings for the keys are drilled in the upper cover board for arranging the keypad underneath. Underneath the keypad are keystroke contacting pieces arranged to contact an IC board, which is located under the key-stroke contacting pieces. Thus, by pressing the keys, the IC board is to be contacted through the keystroke contacting pieces for transmitting control signals.

The afore-mentioned arrangement of the prior art gives rise to the problem that due to the complicated assembling procedure, very high costs for the assembling process and a time-consuming assembling process result.

Therefore, it is an object of the present invention to provide an upper casing part for electrical products with an integrated keypad which overcomes the above-mentioned problems.

This object is solved by an upper casing part for electrical products with an integrated keypad having the features disclosed in claim 1. Preferred embodiments are defined in the dependent subclaims.

### Summary of the invention

The present invention provides an upper casing part for electrical products with an integrated keypad, comprising a single-piece or integral casing part; the single-piece casing part comprises a keypad which is arranged on at least part of its outer surface having at least one key, wherein said keys are integrally formed with said casing part by providing an interstice extending between at least a part of the outer circumference of each key and said casing part and a connecting junction for connecting said key with said casing part so as to form said casing part integrally with said key. Furthermore, a contacting pin is formed integrally and arranged behind each key and extends inwardly away from said outer surface of said casing part. As the keys are integrally formed with said casing part, an integral casing part consisting solely of one single part results, leading to the advantageous effect that the number of components is reduced. Another advantageous effect is that the assembling procedure is simplified leading to lower costs in the production and assembling process of the product. As the contacting pins are formed integrally with each key, i.e. as a single piece, the stability of the arrangement is advantageously improved.

In a preferred embodiment, said keys protrude from said outer surface of said casing part. This embodiment leads to the advantageous effect that the keys can be operated in a more convenient manner, as the keys form a protrusion on the upper surface of the casing part.

Further preferably, said casing part is constructed of flexible material. Due to the characteristics of such a flexible material, such as a plastic, an acrylic acid or a resin, cracking of the upper casing part is advantageously avoided. A further advantage of the use of a flexible material is the possibility of adjusting the required force to operate the keys for different kinds of users.

Further preferably, the connection junction is flexible so that said keys remain depressed when the user presses said keys to contact a circuitry, such as an IC board, a controlling board or similar, and said keys revert to their original position after being released, i.e. the pressure is removed therefrom. Due to the fact that the flexibility of the connecting junction comprises resilient characteristics, said keys revert to their original position after being released without the use of any further mechanical device, such as a spring or similar. This leads advantageously to reduced costs, due to the fact that a smaller number of components is used, and to a maintenance-free device.

In a further preferred embodiment, said contacting pins and/or keys are reinforced or consist of a material of increased and enhanced stability. An advantageous effect of such an arrangement is, to avoid breaking of the contacting pins or keys. Another advantage of such an embodiment is the increased lifetime of such a device.

Further preferably, said contacting pins are shaped as columns, i.e. having a polygonal or circular cross section. Due to the specific shapes of the columns, many different kinds of IC boards can be advantageously used in the electrical product.

Most preferably, said upper casing part is a part of an electrical product, such as a mobile phone, a calculator, a computer keyboard, a microwave oven, a remote controller or a similar product. Due to the versatility of such an upper casing part, it can be advantageously used for many kinds of electrical products.

The above, and other objects, features and advantages of the present invention will become apparent from the following description, when it is read in conjunction with the accompanying drawings, in which like reference numerals designate the same elements.

### Brief description of the drawings.

Fig. 1 is an exploded perspective drawing of an upper casing part for electrical products with an integrated keypad and its bottom cover.
Fig. 2 is a front view of the upper casing part of fig. 1.
Fig. 3 is a perspective view of the upper casing part and the bottom cover of fig. 1 in a assembled state.
Fig. 4 is a front view of the upper casing part of fig. 1 and a partial cross-sectional side view of the upper casing part and the bottom cover of fig. 1.

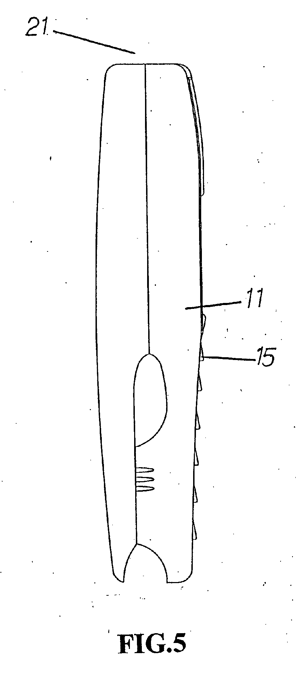

Fig. 5 is a side view of the upper casing part and the bottom cover of fig. 1.

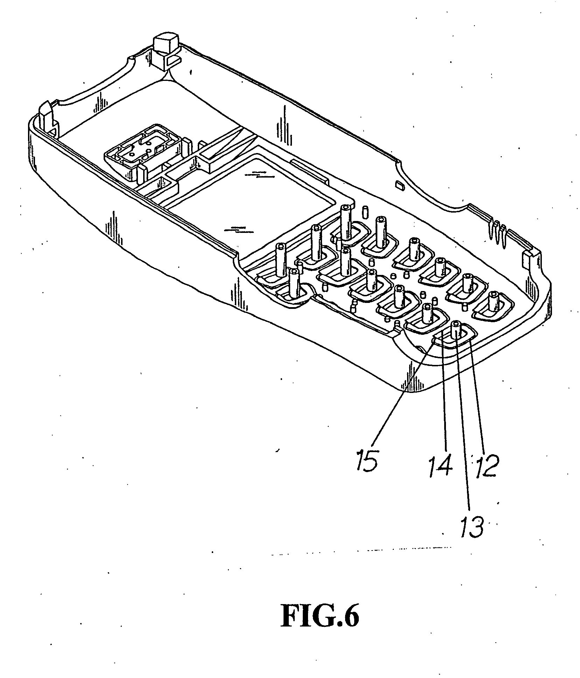

Fig. 6 is a rear perspective view of the upper casing part of fig. 1.
Fig. 7 is a perspective view of another embodiment of an upper casing part.

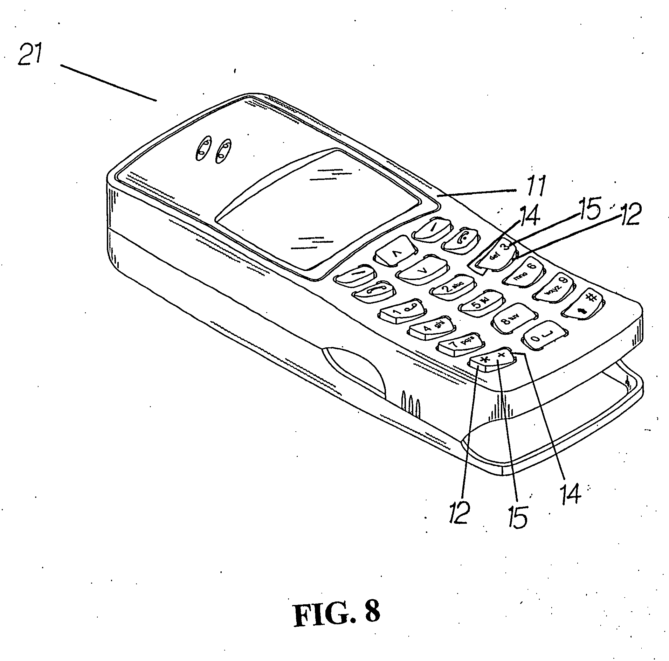

Fig. 8 is a perspective view of the upper casing part and the bottom cover in an assembled state of fig.1.
Fig. 9 is a perspective view of a third embodiment.

### Detailed description of a preferred embodiment

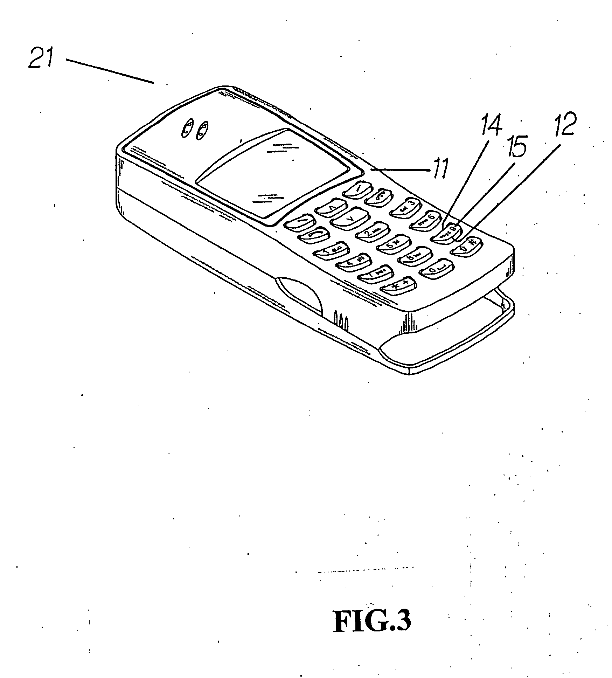

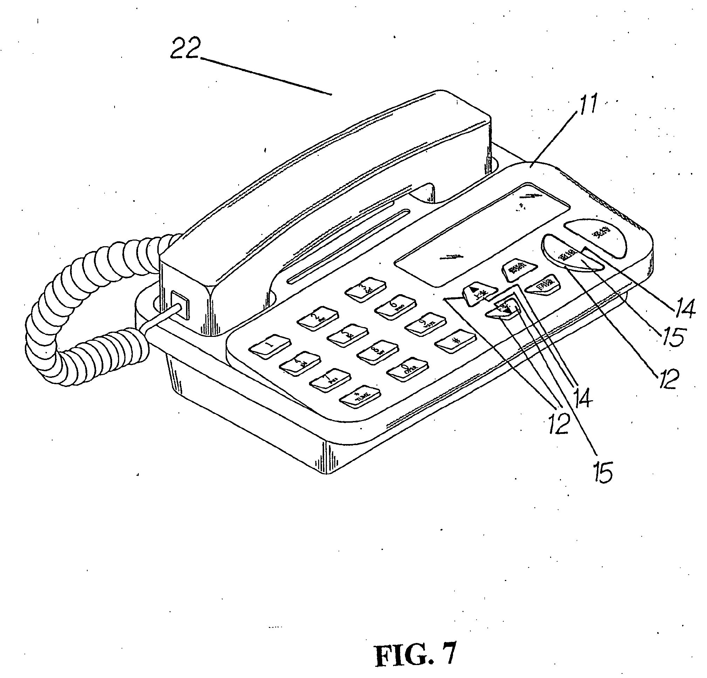

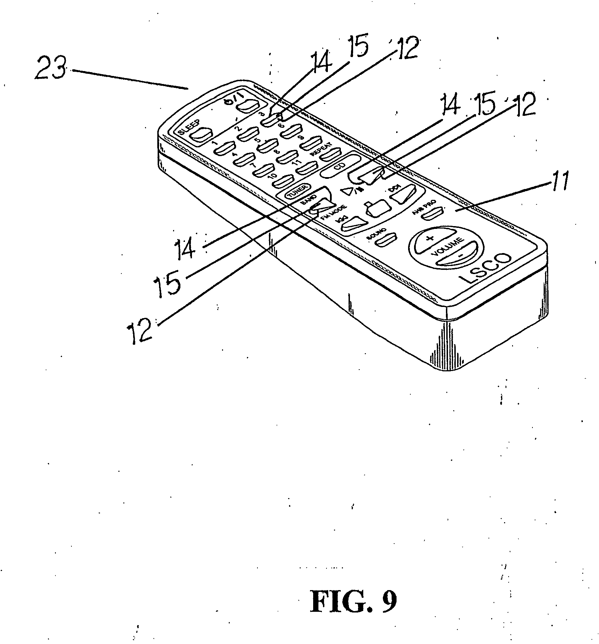

The subject-matter of the present invention is an upper casing part 11 for electrical products with an integrated keypad 16, such as an ordinary mobile phone 21 (shown in fig. 3 and 9), a telephone 22 (shown in fig. 7), calculator, a computer keyboard, a fax machine, a remote controller 23 (shown in fig. 9) or the like.

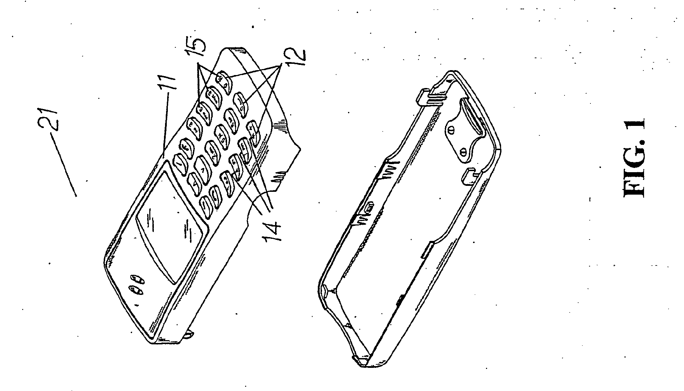

Referring to figs. 1 to 4, an upper casing part 11 can be mounted to a bottom cover 20 to form a casing for a mobile phone 21, or the like. The upper casing part 11 comprises a keypad 16 arranged on at least part of its surface and a display 10 being also arranged on the surface of the upper casing part 11. The upper casing part 11 is formed as a shell having a base portion, which forms the upper surface, and four side walls arranged at the outer circumference of the base portion and extending orthogonally to the base portion in a direction opposite to the arrangement of the keypad 16 and the display 10.

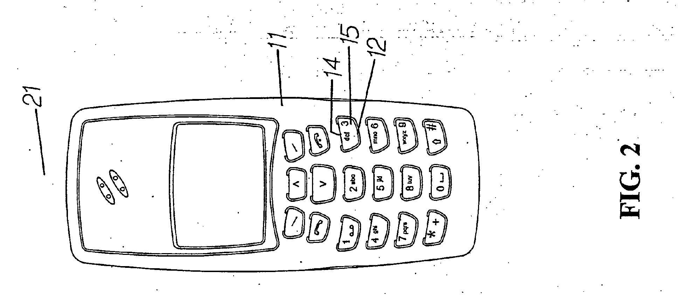

The keypad 16 consists of at least one key 15. The keys 15 are formed by cutting out an interstice 12. The interstice 12 extends between said casing part 11 and substantially three of the four sides of the key 15 as shown in fig. 2. The remaining forth side, which has not been cut out, forms a connecting junction 14 connecting said key 15 and the casing part 11 so as to form said casing part 11 integrally as a single piece with said key 15. The connecting junction 14 is resilient so that said keys 15 remain depressed when the user presses said keys 15 to contact a circuitry being arranged between the upper casing part 11 and the bottom cover 20, such as an IC board, controlling board or similar. After pressure is removed from the keys 15, they revert to their original position due to the resilience of the connecting junction 14. Therefore, no further element is needed to cause the keys 15 to revert to their original position.

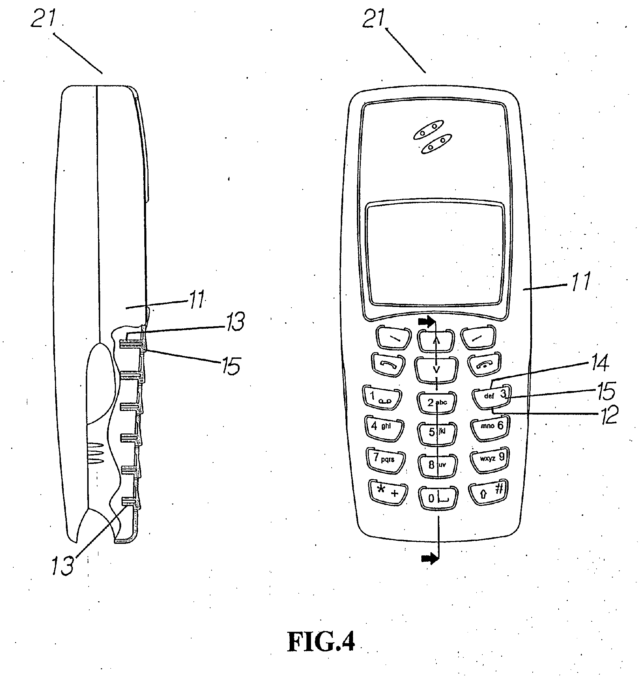

As shown in fig. 4, a contacting pin 13 is formed integrally with each key 15. Said contacting pin 13 is arranged behind each key 15 and extends inwardly away from said outer surface of said casing part 11. The leading/free end of the contacting pins 13 can be brought into contact with a circuitry for transmitting a control signal. The circuitry is arranged at a distance from the contacting pins 13, so that the contacting pins 13 only contact the circuitry when they are pressed by the user. The contacting pins 13 can be of a variety of shapes, so as to be applicable to a variety of circuitry boards.

For the convenience of the user, said keys 15 protrude from said outer surface of the casing part 11. Therefore the outer surface of said casing part 11 is no longer even, i.e. flat, so that the user can feel the single keys 15.

Due to the flexibility of the material, which is used for constructing the upper casing part 11, fracture of the upper casing part 11 itself or one of its connecting junctions 14 is avoided.

### List of Reference Numerals

- 10: display
- 11: upper casing part
- 12: interstice
- 13: contacting pin
- 14: connecting junction
- 15: key
- 16: keypad
- 20: bottom cover
- 21: mobile phone
- 22: telephone
- 23: remote controller

## Claims

1. An upper casing part (11) for electrical products with an integrated keypad, comprising
a single-piece casing part (11);
wherein said single-piece casing part (11) comprises a keypad (16) arranged on at least part of its outer surface having at least one key (15),
wherein said keys (15) are integrally formed with said casing part (11) by providing
an interstice (12) extending between at least a part of the outer circumference of each key (15) and said casing part (11) and
a connecting junction (14) for connecting said key (15) with said casing part (11) so as to form said casing part (11) integrally with said key (15), and
wherein a contacting pin (13) is formed integrally and arranged behind each key (15) and extends inwardly away from said outer surface of said casing part (11).

2. An upper casing part according to claim 1, wherein said keys (15) protrude from said outer surface of said casing part (11).

3. An upper casing part according to one of the preceding claims, wherein said casing part (11) is constructed of flexible material, such as plastic, acrylic acid or resin.

4. An upper casing part according to one of the preceding claims, wherein said connecting junction (14) is resilient so that said keys (15) remain depressed when a user presses said keys (15) to contact a circuitry, such as an IC board, a controlling board or similar, and said keys (15) revert to their original position after being released.

5. An upper casing part according to one of the preceding claims, wherein said contacting pins (13) and/or keys (15) are reinforced or consist of a material of increased stability.

6. An upper casing part according to one of the preceding claims, wherein said casing part (11) is part of an electrical product, such as a mobile phone, a calculator, a computer key board or a remote controller.
